# EUROPEAN PATENT SPECIFICATION

(11) **EP 2 525 668 B1**
(45) Date of publication and mention of the grant of the patent: **27.11.2013**
(21) Application number: 10798085.6
(22) Date of filing: 21.12.2010
(51) Int. Cl.: A23J 3/16, A23L 2/02, A23L 2/52, A23L 2/66, A23L 2/68

(54) **PROCESS FOR PRODUCING A HEAT-TREATED SOY PROTEIN-CONTAINING ACIDIC BEVERAGE AND PRODUCT OBTAINED THEREBY**
VERFAHREN ZUR HERSTELLUNG EINES WÄRMEBEHANDELTEN SOJAPROTEIN ENTHALTENDEN SAUREN GETRÄNKS UND DADURCH ERHALTENES PRODUKT
PROCÉDÉ POUR LA PRODUCTION D'UNE BOISSON ACIDE CONTENANT DES PROTÉINES DE SOJA TRAITÉES THERMIQUEMENT ET PRODUIT CORRESPONDANT

(30) Priority: 22.01.2010 EP 10151439
(43) Date of publication of application: 28.11.2012
(73) Proprietor: Unilever NV, 3013 AL Rotterdam (NL); Unilever PLC, London Greater London EC4Y 0DY (GB)
(72) Inventor: MELLEMA, Michel, NL-3133 AT Vlaardingen (NL); STRÖM, Anna, Helena, Edvardsdotter, NL-3133 AT Vlaardingen (NL)
(74) Representative: Askew, Sarah Elizabeth
(86) International application number: PCT/EP2010/070369
(87) International publication number: WO 2011/088941

(56) References cited:
- WO-A1-2008/131989
- WO-A2-2006/102382
- WO-A2-2007/016547
- US-A1- 2004 126 479
- US-A1- 2009 117 231

## Description

### Field of the invention

The present invention relates to a process for producing a soy protein-containing acidic beverage that shows good physical stability after heat preservation. Further to this the invention relates to a beverage obtained by this process.

### Background of the invention

Fruit-juices and other acidic juice-like beverages are popular commercial products. This popularity comes with the fresh taste experienced by the consumer when drinking a beverage having a pH of between about 3.0 to 5.5. On top of that consumer demand for nutritional healthy beverages has led to the development of nutritional juice or juice-like beverages containing protein. The protein provides nutrition in addition to the nutrients provided by the components of the beverage. Recently it has been discovered that certain proteins have specific health benefits beyond providing nutrition. For example, soy protein has been recognized by the United States Food and Drug Administration as being effective to lower blood cholesterol concentrations in conjunction with a healthy diet. In response to this and following a desire for protein-containing beverages without animal proteins, there has been a growing consumer demand for acidic juice-like beverages containing soy proteins providing such specific health benefits.

A hurdle to adding protein to acidic beverages, however, is the relative insolubility of proteins in an aqueous acidic environment. Commonly used proteins, such as soy proteins and casein, have an isoelectric point at an acidic pH. Thus, the proteins are least soluble in an aqueous liquid at or near the pH of acidic beverages. For example, soy protein has an isoelectric point at about pH 4.5 and casein has an isoelectric point at about pH of 4.7, while most common fruit-juices have a pH below these isoelectric points. As a result, protein tends to settle out as sediment when present in such acidic beverages, which is highly undesirable.

Protein stabilising agents that stabilise proteins as a suspension in an aqueous acidic environment are used to overcome the problems presented by protein insolubility. One of the most commonly used agents for stabilising protein in acidic beverages is pectin, more particularly highly methylated pectin (HM pectin) which is the standard protein stabiliser in a lot of products.

To extend the shelf-life of protein-containing acidic beverages it is common practise to pasteurize or sterilise the beverage prior to packaging. However, despite the use of HM pectin as a stabilising agent, the stability of protein-containing acidic beverages is still adversely affected by thermal processing.

When treated at high temperatures long enough for pasteurisation or sterilisation, the pectin stabilised acidic protein-containing beverage tends to show increased sedimentation of protein-aggregates, either directly or shortly after the heat treatment. This will result in a product that is unattractive to consumers as this leaves an off-putting residue at the bottom of the beverage product unless the product is vigorous shaken before use. Such re-dispersion of the proteins may get rid of the residue at the bottom but will still result in a beverage with unpleasant mouth feel due to the presence of flocculates (i.e. floating protein aggregates/particles).

This sensitivity to heat treatments presents a serious problem when a beverage with a long shelf life is desired. This is particularly the case for acidic beverages at a pH of between about 3.0 and 5.5 which contain soy proteins. Due to the presence of trypsin inhibitor, lipoxygenase and spores in soybeans, the raw material from which the soy protein is obtained has to be treated at high temperatures to inactivate these undesired components during the extraction of the soy protein. During sterilisation or pasteurisation of a soy protein-containing acidic beverage at elevated temperatures to extend the shelf life of the beverage, the soy protein undergoes a second heat load. In acidic beverages containing dairy proteins, the protein generally needs to be subjected to a single heating step during the sterilisation or pasteurisation of the final beverage. The more severe heat load experienced by the soy protein makes that soy protein-containing acidic beverages tend to be more sensitive to protein-aggregation and phase separation during sterilisation or pasteurisation than other acidic protein containing beverages.

It is this sensitivity to heat treatments that makes that in current factory processes wherein pectin is used to stabilise soy protein-containing acidic beverages, these beverages are pasteurized or sterilised under relatively mild conditions and that consequently the containers used to bottle these beverages have to be sterilised separately, followed by bottling under aseptic conditions.

A process that requires separate sterilisation/pasteurisation of beverage and bottle followed by filling under aseptic conditions is difficult and expensive to scale up (to increase production volumes), since it requires at least part of the production lines to be operated under aseptic condition.

Because of the health benefits associated with acidic juice-like beverages containing soy proteins there is a growing consumer demand for such products. Given the above described issues with scaling-up the currently used aseptic bottling lines, it would be highly desirable to be able to use a so-called "hot-fill" bottling process to respond to such increasing demands.

In hot-fill bottling processes as to be understood herein, the containers are sterilised by the temperature of the product filling the container and thus the need for operating the production line under aseptic conditions no longer exists. For sufficient sterilisation of the bottle, the temperature of the beverage when entering the bottle should be at least 85 °C but higher temperatures are preferred. In order to allow the soy protein beverage to be sterilised properly and to make sure that the temperature of the beverage is sufficiently high to sterilise the containers it is desired to heat the beverages to a temperature of more than 100 °C without significant aggregation and/or sedimentation of the soy proteins occurring.

US6890578 (Fuji Oil) discloses acidic protein foods employing pectin which has been low-molecularized to a viscosity of no greater than 150 mPa.s as a stabilizer for the acidic protein foods, wherein the pectin is added at greater than 0.4 wt percent to the acidic protein foods. It is possible to achieve a wider stable pH range and improvement in palatable texture due to lower viscosity of the products. Further to this it discloses a process for production of acidic protein foods which comprises using low-molecularized pectin at greater than 0.4 wt percent, as well as a process for production of acidic protein foods whereby acidic protein foods containing non-low-molecularized pectin at greater than 0.4 wt percent are heated at 100 degrees centigrade or above. Still further it discloses a stabilizer for acidic protein foods which contains low-molecularized pectin as an active ingredient.

The disadvantage of the method described in this document is that it uses low molecularized pectin as a stabiliser which is quite difficult to obtain since it requires a low molecularization step after or during the extraction of the intermediate pectin from the raw materials. Further to this US6890578 does not show that a soy protein-low molecularized pectin system is also stable after such a high temperature treatment nor does it show an improved stability for longer storage times. It also does not show that high temperature sterilised products can be obtained that are stabile over a pH range from 3.0 to 5.5. Even for a relatively less temperature sensitive system like a dairy protein containing acidic beverage, the low molecularized pectin stabilised beverages at a pH of below 4 or above 5 show notable coagulation after sterilisation at 121 °C even with a high amount of stabiliser.

US20040247766 (Fuji Oil) discloses a soybean protein beverage having an excellent taste and mouthfeel and high storage stability with preventing formation of a precipitate at a weak acidic region as well as its production process are disclosed. Said beverage utilizes as its protein source low-phytic acid beta-conglycinin obtained by fractionating and purifying beta-conglycinin which is a soybean protein fraction and further decomposing and removing phytic acid bound to the resultant beta-conglycinin to increase the solubility at a weak acidic region.

The disadvantage of the process described in this publication is that it requires a highly purified form of soy protein in order to prevent precipitation of the soy protein. The major part of the soy protein composition present in the soybean is discarded.

US2007/0092625 (Fuji Oil) discloses a protein-containing acidic food or drink having a favorable flavor and relieved astringency that is characteristic to a dissolved protein, and to provide materials thereof. The acidic protein food or drink comprising one or more of salts or saccharides selected from the group consisting of water-soluble polysaccharides, water-soluble basic salts, alkali metal salts of organic acids, basic monosaccharides and basic oligosaccharides, and acidic-soluble protein;

In US2007/0148321 (Fuji Oil) it is intended to provide a food or a drink with a favorable flavor which has an acidic nature, contains protein and minerals, and has been stabilised in dispersion without showing any protein aggregation or the like even in the absence of a stabiliser. By using an acid-soluble soybean protein, it is possible to provide an acidic mineral-containing food or drink which has a high stability without resort to a stabiliser as an essential component.

The disadvantage of the methods described in US2007/0092625 and US2007/0148321 is that these also require a very specific fraction of the soy protein composition present in soybeans. Again a major part of the soy protein composition present in the soybean is not used.

### Summary of the invention

Accordingly it is an object of the current invention to provide a simple process that allows high temperature (in excess of 100 °C) preservation treatments of soy protein-containing acidic aqueous compositions to obtain a product with acceptable physical stability.

It is a further object of the invention to provide such a process wherein the soy protein composition used is close to the soy protein composition present in the soybean itself (i.e. it is not a very limited fraction of the soy protein composition present in a soybean), e.g. to limit waste streams.

It is a further object of the present invention to provide a process wherein the source of soy protein used has not been obtained by severe fractionation and/or purification steps

It is a further object of the present invention to provide a process for high temperature treatments of soy protein-containing acidic aqueous compositions using a stabiliser that can be easily obtained (e.g. without the need for an additional low molecularization (or de-polymerization) step).

It is a further object of the present invention to provide a process for sterilising soy protein-containing acidic aqueous compositions without unacceptable sedimentation of the soy proteins present in the aqueous composition.

It is another object of the present invention to provide a process that allows the soy protein-containing acidic aqueous composition to be bottled by a hot-filling process.

It is yet another object of the invention to provide a soy protein-containing acidic beverage with excellent shelf life and long term storage stability.

We have surprisingly found that the above objectives can be realised, at least in part, by using a process for preparation of a soy protein-containing acidic beverage comprising the steps of:
- providing an aqueous composition having a pH of between 3.0 and 5.5, comprising 0.2 to 5 wt% of soy protein and at least 0.1 wt% of water soluble soybean polysaccharide as a stabiliser, wherein the soy protein has a degree of solubility at a pH of 4.5 of less than 40 wt%, and wherein the weight ratio of the soy protein to water soluble soybean polysaccharide is between 7:1 and 1:2; which soluble soybean polysaccharide can be added as such and/or liberated from the whole soybean source by partly hydrolysing the soy cell wall material, and
- heating the aqueous composition to a temperature of more than 100 °C for at least 4 seconds.

We have found that this process provides a beverage that after having been subjected to high temperature (>100 °C) heat treatments, e.g. for preservation purposes, such as sterilisation, does not show unacceptable sedimentation of protein aggregates even after a storage time of 15 weeks at room temperature (20-25°C). The composition of the soy protein used is close to the natural protein composition in soybeans and has not been highly purified. The process makes use of a water soluble soybean polysaccharide as a stabiliser which can quite easily be extracted from soybeans by partly breaking down or hydrolysing the cell wall material. Further to this, the process allows a sterilised soy beverage to be packaged by hot filling which was not possible before.

Further objectives are realised, at least in part, by providing a beverage obtainable by the process as described above.

### Detailed description

All percentages herein are by weight (wt%), unless otherwise specified. The weight percent values are based on the weight of the ingredient of interest in percentage in relation to the total weight of all ingredients present in the product of interest, unless specified otherwise.

In respect to the use of the term "degree of protein solubility," the term is defined herein as a scale of solubilisations of protein in water and is represented by the portion of the protein that is soluble at a concentration of 2.5 wt% of said protein in water at a pH of 4.5 (the average isoelectric point of common soy proteins) and a temperature of 20°C.

The degree of solubility as herein referred to is determined by dispersing a protein-containing powder in water so that the concentration of the constituent protein becomes 2.5 wt%, followed by thoroughly stirring. After adjusting the pH of the resulting solution if necessary, the solution is centrifuged at 10,000 G for 5 minutes, and the proportion of the supernatant protein to the total protein is determined. This proportion equals the degree of solubility.

In respect to the use of the term "isoelectric point," (pl) the term is defined herein as the midpoint of the composite curve of the various isoelectric points of the individual protein components.

In a first aspect, the current invention relates to a process for the preparation of a soy protein-containing acidic beverage comprising the steps of:
- providing an aqueous composition having a pH of between 3.0 and 5.5, comprising a whole soy bean source in such an amount that the total protein content in the composition is from 0.2 to 5 wt%, and at least 0.1 wt% of water soluble soybean polysaccharide as a stabiliser, wherein the soy protein has a degree of solubility at a pH of 4.5 of less than 40 wt%, and wherein the weight ratio of the soy protein to water soluble soybean polysaccharide is between 7:1 and 1:2; which soluble soybean polysaccharide can be added as such and/or liberated from the whole soybean source by partly hydrolysing the soy cell wall material, and
- heating the aqueous composition to a temperature of more than 100 °C for at least 4 seconds.

A preferred whole soybean source comprises the integral protein fraction of the soybean, wherein the integral fraction may be regarded as at least 90% of the protein available in the natural soybean. Preferred whole bean sources are whole bean powder and/or soymilk. A suitable whole bean powder preferably comprises less than 60 wt% of soy protein. Suitable soy milk preferably comprises less than 20 wt% of soy protein. The most preferred source of soy protein is whole bean powder since this can be obtained from the soybean with only very limited processing unlike the low-phytic acid beta-conglycinin or acid soluble soybean fractions as described in the Fuji Oil publications. The soy protein used in the process of the present invention has a degree of solubility in water at a pH of 4.5 of less than 40 wt%, preferably less than 30 wt%, more preferably less than 20 wt%.

The amount of soy protein present in the beverage or aqueous composition is from 0.2 to 5.0 wt%, preferably from 0.3 to 4.0 wt%, more preferably from 0.4 to 3.0 wt%, most preferably from 0.5 to 2.0 wt%. Within these ranges an unacceptable amount of segregation of the proteins can be avoided while still providing a sufficient level of soy protein for its nutritional value.

The soy protein may be provided in any suitable form, for example, combined with an amount of one or more oils to help the preparation of the food product, as a powder or in the form of an aqueous solution or dispersion.

In respect to the term 'water soluble soybean polysaccharide' as used herein, the term is to be understood herein as a heteropolysaccharide obtainable from crude soy material, comprising a galacturonic acid content of less than 40 mol%, preferably less than 30 mol%, more preferably less than 25 mol% and a neutral sugar (side chains) content of more than 40 mol%, preferably more than 50 mol%, more preferably more than 60 mol%. The soluble soybean polysaccharide is part of the cell wall material of soy. A source comprising the water soluble soybean polysaccharide may be obtained (liberated) from whole soybean material by subjecting soybean material to a process which partially breaks down or hydrolyses the cell wall material of soy, with which it is associated with. For this partially breakdown subjecting only to mechanical force is not necessary, it requires hydrolysis by a strong acid or base material or enzymatic breakdown, optionally combined with subjecting the material to high temperatures during the hydrolysis, and optionally combined with high shear.

The neutral sugar composition and the level of the different components is analysed using gas chromatography (GC) after hydrolysis and derivatisation [Hans N. Englyst and Hohn H. Cummings, Simplified method for the measurement of total non-starch polysaccharides by gas-liquid chromatography of constituent sugars as alditol acetates, Analyst, 1984, 109, 930-942; Hauke Hilz, et al, Cell wall polysaccharides in black currants and bilberries - characterisation in berries, juice, and press cake, Carbohydrate Polymers, 2005, 59(4), 477-488].

The uronic acid content is analysed with a m-hydroxydiphenyl colour assay [Thibault, J.F. Automatisation du dosage des substance pectiques par la methode au meta-hydroxydiphenyl (An automatised method for the determination of pectic substances), Lebensmittel-Wissenschaft und Technologie, 1979, 12, 247-251].

Water soluble soybeans polysaccharide (SSPS) is a more branched polymer than HM pectin. Without wishing to be bound by it, its backbone is believed to consist of homogalacturonan regions interlinked by short regions of rhamnogalacturonan to which side chains of neutral sugars are attached. Also the backbone of HM pectin consist of homogalacturonan, interspersed with some rhamnogalacturonan regions (although few) and the side chains of commercial pectin are typically few and short. The main component in both SSPS and commercial HM pectin are galactose, arabinose, rhamnose, fucose, xylose, glucose and galacturonic acid. However, whereas commercial pectin consist mainly of galacturonic acid (typically > mol 60%) and few neutral sugars (about 9 mol %), a preferred SSPS consist mainly of arabinose, galactose and galacturonic acid. Preferably, the amount of galactose in the SSPS is higher than 20 mol%, preferably higher than 30 mol%, more preferably higher than 35 mol%. The amount of arabinose in the SSPS is preferably higher than 15 mol%, more preferably higher than 20 mol%, most preferably higher than 23 mol%. The Mw of the two polymers differs as well. Where SSPS typically has a Mw of several 100kDa, pectin typically has a Mw of around 70-150kDa.

Due to the high cost of SSPS the amount of SSPS used is preferably as low as possible. The actual amount of water soluble soybean polysaccharide used may vary depending on the total amount of protein present. However, the amount of water soluble soybean polysaccharide present in the beverage or aqueous composition of the invention to stabilise the soy proteins is at least 0.1 wt%. To provide sufficient stabilisation of the soy proteins, the weight ratio of soy protein to water soluble soybean polysaccharide is between 7:1 and 1:2, preferably between 6:1 and 1:1, more preferably between 5:1 and 2:1, most preferably between 4:1 and 3:1. The SSPS may be added as such (it is a commercially available material) and/or as part of whole soybean source from which it is liberated as described above.

The present invention does not require the use of other polysaccharide stabilisers in addition to the water soluble soybean polysaccharide since these may adversely affect the stability of the soy protein-containing acidic beverage stabilised with SSPS. Preferably, the beverage or aqueous composition of the current invention therefore contains less than 0.2 wt% of pectin, preferably less than 0.1 wt% of pectin, more preferably substantially no pectin.

The acidic aqueous composition and/or resulting soy protein-containing acidic beverage may also contain additional ingredients. Such additional ingredients may comprise carbohydrates, fruits (including juices, concentrates and isolates), emulsifiers, proteins, flavours, organic acids, fats, vitamins, minerals, high intensity sweeteners or mixtures thereof. Suitable carbohydrates include sugars, starches, and maltodextrin. Suitable fruits include apple, apricot, banana, grapefruit, grape, guava, lemon, lime, mandarine, mango, orange, peach, pommelo, pumpkin, squash, tangarine, tomato and mixtures thereof. Suitable organic acids include lactic acid, malic acid, citric acid and ascorbic acid. Suitable minerals include calcium, magnesium, iron and zinc. Suitable high intensity sweeteners include sucralose and aspartame. When additional proteins sources are desired these are preferably restricted to non-animal proteins. Preferably the beverage or aqueous composition of the present invention comprises substantially no dairy proteins, more preferably they are dairy-free.

For reasons of e.g. taste and microbiological stability, the acidic aqueous composition and/or resulting soy protein-containing acidic beverage according to this invention has a pH of between 3.0 and 5.5, preferably between 3.8 and 4.7. The desired pH can be obtained by addition of edible acids, acidic fruits (including whole fruit, juices, extracts and concentrates) or combinations thereof. Suitable edible acids may be lactic acid, malic acid, citric acid, ascorbic acid or mixtures thereof. Suitable acidic fruits may be selected from the acidic fruits in the list of fruits given above.

The aqueous composition is prepared by mixing, dissolving and/or dispersing the desired ingredients in an aqueous liquid. Although the order of additional is not important it is preferred to first prepare two separate aqueous compositions. The first aqueous composition comprises the soy-protein, while the second comprises the water soluble soybean polysaccharide. These two compositions are mixed followed by the addition of any acids necessary to bring the aqueous composition at the desired pH and the addition of any other ingredients desired. Optionally, any of the ingredients added to the aqueous composition in addition to the soy protein and the water soluble soybean polysaccharide are added to the first and/or second aqueous compositions before these are mixed.

The mixing operations used during the preparation of the aqueous composition are preferably selected from high shear mixing, high pressure homogenisation process (e.g. at 150-200 bar) and combinations thereof. To improve the stability of the resulting beverage it is preferred that the process comprises a high pressure homogenisation step just after the heat preservation step. Optionally, this high pressure homogenisation step is performed at high temperatures. This may particularly be desirable if the homogenisation step is followed by a hot fill packaging step. The temperature at which this high pressure homogenisation step is executed is preferably chosen between the temperature of the preservation treatment and the temperature of the beverage during hot fill packaging. Optionally the process comprises a high temperature and/or high pressure homogenisation step just after sterilisation.

According to the present invention the heat preservation treatment of the acidic aqueous composition involves exposure of the aqueous composition to a temperature in excess of a 100°C. Preferably during this heat treatment the acidic aqueous composition is heated to a temperature of more than 110 °C, preferably more than 120 °C. The duration of the exposure of the aqueous composition to these high temperatures is at least 4 seconds, preferably at least 10 seconds, more preferably at least 15 seconds. Preferably, the conditions of the heat treatment (temperature, duration) are such that the product is sterilised. Sterilisation is desired in order to obtain a microbiologically stable soy protein-containing acidic beverage.

The process of the current invention now allows sterilisation under conditions that provide a microbiologically stable product without the adverse effect of unacceptable protein-aggregation and/or sedimentation occurring.

This possibility to sterilise the obtained acidic soy beverage at such high temperatures without these adverse effects occurring may for the first time allow soy protein-containing acidic beverages having a pH of between 3.0 and 5.5 to be packaged by a so-called hot filling process. Such a process has the advantage that the containers used to bottle these beverages do not have to be sterilised separately, followed by bottling under aseptic conditions. Naturally, the current process does also allow bottling under aseptic conditions.

In respect to the use of the term "hot fill packaging" the term is defined herein as a process used in industry wherein containers (e.g. bottles) are filled with a product hot enough to sterilise the container and ensure continued sterility of the product during and after the filling process.

In the hot-fill bottling processes according to the current invention the containers are sterilised by the temperature of the product filling the container and thus the need for operating the production line under aseptic conditions no longer exists. For sufficient sterilisation of the bottle, the temperature of the beverage when entering the bottle should be at least 85 °C but higher temperatures are preferred.

In a preferred embodiment of the present invention the process according to the present invention may thus also comprise a 'hot fill' packaging step during which the temperature of the beverage is at least 85 °C when entering the package. Preferably the temperature of the beverage is at least 90 °C, more preferably at least 95 °C, when entering the package.

In a second aspect the present inventions relates to a heat preserved soy protein-containing acidic beverage obtainable by a process according to the first aspect of the present invention.

The heat preserved soy protein-containing acidic according to the present invention has a pH of between 3.0 and 5.5, preferably between 3.8 and 4.7. Preferably the soy protein-containing acidic beverage comprises 0.2 to 5 wt% of soy protein and at least 0.1 wt% of water soluble soybean polysaccharide as a stabiliser.

As previously described the soy protein comes from a whole soybean source. The soy protein has a degree of solubility at a pH of 4.5 of less than 40 wt%. The weight ratio of the soy protein to water soluble soybean polysaccharide is between 7:1 and 1:2, preferably between 6:1 and 1:1, more preferably between 5:1 and 2:1, most preferably between 4:1 and 3:1.

In addition to soy protein and water soluble soybean polysaccharide the beverage may contain any of the additional ingredients referred to in the description of the first aspect of the invention.

Suitable compositions may comprise water, soy protein, water soluble soybean polysaccharide, maltodextrin, sucrose, fruit juice, organic acid, calcium and artificial sweetener.

The amount of water present in the beverage may be between 60 and 99 wt%, preferably between 80 and 98 wt%.

Preferably the beverage is sterilised and packaged. Preferably the packaged beverage obtained by any of the above described processes according to the present invention has a shelf life of at least 20 weeks, preferably at least 6 months, more preferably at least 9 months, most preferably at least one year when stored at room temperature (20-25°C) in unopened condition.

In respect to the use of the term "shelf life", this term is defined as the length of time that the beverage remains suitable for sale or consumption. One aspect that is important for a long shelf life is the prevention of microbiological activity in. This microbiological activity may be prevented/reduced by sterilisation of the beverage (and package).

During this shelf life the proteins in the beverage should remain sufficiently stabilised. A beverage according to the current invention is considered "sufficiently stabilised" when at a soy protein level of 0.6 wt% such beverage shows a level of sedimentation of protein-aggregates of less than 30 ml/l, preferably less than 25 ml/l, more preferably less than 20 ml/l, most preferably less than 15 ml/I after storage at 20°C for 20 weeks.

The size of the particles in the beverage may be giving an indication of the stability of the beverage. These particle sizes may be expressed as D_{3.2} or D_{4.3} diameter and can be measured using static light scattering (Malvern Mastersizer X, Malvern Instruments, UK) wherein a refractive index of 1.68 is used. For a long term stability the beverage preferably has an particle size (D_{3.2}) of less than 2.0 preferably less than 1.0 micrometer.

### Examples

The following examples further describe and demonstrate embodiments within the scope of the present invention. These examples are given solely for the purpose of illustration and are not to be construed as a limitation of the present invention, as many variations thereof are possible without departing from the invention's spirit and scope.

### Equipment:

### Rotational rheology:

The viscosity of the samples was measured on an AR 1000 (TA instruments, New Castle, USA). The viscosity was measured between shear rates of 0.1 and 1000 s⁻¹. The geometry used was a cone (Φ = 40mm, truncation = 55µm, angle = 2°) and a plate.

### Particle size:

The particle sizes were measured using static light scattering (Malvern Mastersizer X, Malvern Instruments, UK). A refractive index of 1.68 was used.

### Zetapotential:

The zetapotential of the protein and the polysaccharides used were measured as a function of pH. The pH was reduced by the addition of a small amount of HCl or NaOH. No buffering system with regards to ionic strength was used. The equipment used was a Zetasizer, nanoseries from Malvern Instruments.

### Abbreviations:

The following abbreviations are used throughout the description of the examples:

| | |
|---|---|
| DM | - Degree of methylation |
| DE | - Degree of esterification |
| DS | - Degree of substitution |
| Ex | - purchased from |
| g, kg | - gram, kilogram |

### Ingredients:

| | |
|---|---|
| WBP | - whole bean powder, Sunopta fiber reduced (ex Sunopta Grains and Foods Group) (contains about 45wt% of soy protein) |
| SSPS | - soluble soy polysaccharide (CA100) (ex Fuji Oil) |
| HM8140 | - HM pectin HM8140 (ex CP Kelco) |
| AMD783 | - HM pectin AMD783 (ex Danisco) |
| Apple pectin | - apple pectin, brown ribbon (ex Obipektin) |
| LMw pectin | - Low Mw pectin prepared from HM pectin AMD783 |
| CMC-A | - carboxymethyl cellulose AMD256 (ex Danisco) |
| CMC-B | - carboxymethyl cellulose Blanose (ex Hercules) |
| PGA | - polyglycol alginate (ex FMC Biopolymers) |
| Gum Arabic | - Arabic gum (Super Gum EM10) (ex San-Ei Gen F.F.I Inc) |
| Maltodextrin | - Maltodextrin DE 17-20 (ex Syral SA) |
| Citric acid | - Citric acid anhydrate (ex Merck) |
| Guar | - Guar 2463 (ex Willy Benecke GmbH) |

All commercial pectins had a DM of between 70-85%.

The water soluble soybean polysaccharide used in the experiments comprised the following components with amounts in brackets: fucose (about 3 mol%), arabinose (about 25 mol%), rhamnose (about 5 mol%), galactose (about 39 mol%), glucose (about 3 mol%), xylose (about 6 mol%), galacturonic acid (about 18 mol%) and glucuronic acid (about 1 mol%).

The low Mw pectin was prepared from the AMD783 pectin. The AMD783pectin was dissolved at a concentration of 4 wt%, pH was set to 5.5 and the slurry was thereafter heated for 6 hours at 80 °C, as described in US2006/0210668 (paragraph 80). The reduction in Mw was followed by measuring the viscosity of the sample. The viscosity dropped from initial 1.40 Pa.s to 0.4 Pa.s during the 6 hours. The DM during the reaction was followed using capillary zone electrophoresis, no change in DM was observed during the 6 hours of reaction.

The two CMC samples had a degree of substitution (DS) of between 0.7-0.9.

The whole bean powder (WBP) contained about 45 wt% protein, 24 wt% fat and 21 wt% carbohydrate plus moisture and ash.

### Experiment 1

The stability of polysaccharide stabilised soy protein-containing beverages of pH 4 was determined using the polysaccharide stabilisers AMD783, HM8140, apple pectin, LMw pectin, SSPS, CMC-A, CMC-B, PGA and gum Arabic respectively.

All products were prepared according to below description:
Four slurries were prepared:
   1. Slurry containing the soy protein.
   2. Polysaccharide stabiliser slurry
   3. Sugar syrup solution
   4. Fruit juice and mineral slurry

### 1. Slurry containing the soy protein.

106.45 g of whole bean powder (WBP) was dispersed in 1056.91 g of hot water (T ∼ 70-80 °C) under vigorous mixing (ultraturrax) and left until maximum dissolution was obtained. The slurry was not heated during the stirring and was therefore allowed to slowly cool down.

### 2. Polysaccharide stabiliser slurry

The polysaccharide stabiliser slurry was prepared by dispersing dry mixed polysaccharide stabiliser (13.96 g) and sugar (31.39 g) in 583.53g of water at room temperature (∼20 °C). Some guar (0.81 g) was added to the slurry and the slurries were left for about 15 minutes for the polysaccharides to hydrate.

### 3. Sugar syrup solution

A sugar syrup solution was prepared by dissolving 460.18 g of sugar in 231.82 g of water. The solution was heated to about 60 °C under mild stirring to ensure proper dissolution of the sugar and then left to cool down.

### 4. Fruit juice and mineral slurry

A slurry containing flavour and mineral was prepared (under gentle mixing) by addition of citric acid (anhydrous) (5.42 g), ascorbic acid (2 g), calcium chloride (2.16 g), maltodextrin (16 g) and fruit juice (166 g) in 558.11 g of cold water (5-10 °C).

The polysaccharide stabiliser slurry (631.12 g) was added to the protein slurry (1163.36 g), mixed and homogenised at 180 bar. This solution was thereafter stored cold during the night.

The rest of the ingredients were added to the polysaccharide protein solution. To 1794.48 g of the protein polysaccharide solution 692 g of the sugar syrup solution, 4763.68 g of water and 749.76 g of the fruit and mineral slurry was added under gentle stirring Final pH was verified and adjusted with citric acid to pH 4.0 if needed. All end products had a pH of 4.

The final compositions were thereafter heat treated at different temperatures, homogenised at 180 bar and packed (filled) in small plastic bottles. Each package contained 300 ml of end product.

The different heat treatments were:
a) 80 °C for 30 seconds and filled below 73 °C
b) 105 °C for 8 seconds and hot filled (> 90 °C)
c) 125 °C for 17 seconds and hot filled (>90 °C)

Storage: The products that were heat treated above 100 °C and filled hot were stored under ambient conditions for 20 weeks. The products that were heat treated at 80 °C and filled at a temperature below 73 °C were stored under chilled conditions (5°C) for 20 weeks.

Apart from variation in the type of polysaccharide stabiliser, all products contained the same ingredients at the same concentrations. The amount of soy protein in the end products was 0.6 wt% , the amount of polysaccharide stabiliser was 0.17 wt%.

The products were analysed with regards to particle size and amount of sedimentation. For stable products over shelf life a particle size (D_{3.2}) in the end product of below 1 micron is aimed for. The sedimentation is determined by measuring the height of the sediment at the bottom of the bottle. Every mm of sedimentation is equal to 1.3 ml of sediment in 300ml of end product (i.e. every mm of sedimentation measured is equal to about 4.3 ml of sediment per litre of end product).

Table 1 shows particle size and sedimentation after 1 week of storage under chilled conditions for the mildly heat treated products (80 °C for 30 seconds and filled below 73 °C).

Table 2 shows particle size and sedimentation after 1 week of storage under ambient conditions for the products treated at intermediate heat conditions (105 °C for 8 seconds and hot filled (> 90 °C)). Table 3 shows particle size and sedimentation after 1 week of storage under ambient conditions for the products treated at sever heat conditions (125 °C for 17 seconds and hot filled (>90 °C)).

**Table 1: Particle size and sedimentation after 1 week of storage under chilled conditions for the mildly heat treated products (80 °C for 30 seconds and filled below 73 °C).**

| Stabiliser | D_{3.2} (micron) | D_{4.3} (micron) | Sediment (mm) |
|---|---|---|---|
| CMC-B | 1.1 | 12 | 1 |
| CMC-A | 1.8 | 23 | 1 |
| PGA | 1.4 | 22 | 1 |
| AMD783 | 0.37 | 3.4 | 1 |
| HM8140 | 0.6 | 9.9 | 1 |
| Gum Arabic | | | 40 |
| SSPS | 0.28 | 8.6 | 1 |
| Apple pectin | 2.6 | 65 | 1 |
| No added polysaccharide | 20 | | 30 |

These results show that most polysaccharide stabilisers tested provide good stabilisation for the products that have been mildly heat treated. As can be seen the products stabilised by CMC-A, CMC-B, PGA, AMD783, HM8140 and SSPS showed a relatively low D_{3.2} particle size and only a small amount of sedimentation. The product stabilised by apple pectin showed relatively large particle size. The product stabilised by gum Arabic showed an unacceptable high amount of sedimentation (particle size was not even measured).

Results as shown in table 2 show that increasing the heat load experienced by the products reduces the stabilisation power of most stabilisers.

**Table 2. Particle size and sedimentation after 1 week of storage under ambient conditions for the products treated at intermediate heat conditions (105 °C for 8 seconds and hot filled (> 90 °C)).**

| Stabiliser | D_{3.2} (micron) | D_{4.3} (micron) | Sediment (mm) |
|---|---|---|---|
| CMC-B | 10 | 121 | 7 |
| CMC-A | 7.4 | 55 | 11 |
| PGA | 38 | 70 | 39 |
| AMD783 | 1.8 | 24 | 2 |
| HM8140 | 27.8 | 41.8 | 39 |
| Gum Arabic | 32 | 56 | 33 |
| SSPS (CA100) | 0.85 | 30 | 1 |

As can be seen from these results the particle size and/or level of sedimentation increased to unacceptable levels for nearly all tested polysaccharides stabilisers. The product that showed the lowest D_{3.2} particle size and lowest level of sedimentation was the product stabilised by SSPS.

The effect of further increasing the heat load experienced by the products on the stability of these products can be seen in table 3.

Table 3 Particle size and sedimentation after 1 week of storage under ambient conditions for the products treated at severe heat conditions (125 °C for 17 seconds and hot filled (>90 °C)). Sedimentation data between brackets is after 20 weeks of storage.

| Stabiliser | D_{3.2} (micron) | D_{4.3} (micron) | Sediment (mm) |
|---|---|---|---|
| CMC-B | 3.6 | 6.2 | 8 |
| CMC-A | 5.6 | 8.8 | 14 |
| PGA | 11.7 | 40 | 17 |
| AMD783 | 2.4 | 8 | 7 |
| HM8140 | 3 | 9 | 3 (8) |
| LMw Pectin | 6.8 | 11 | 11 |
| SSPS | 0.25 | 3 | 1 (4) |

As can be seen from these results again the product stabilised by SSPS showed the best results with regard to particle size and sedimentation. For the products treated at these severe heat conditions the stabilising power of gum Arabic was not tested due to its poor stability power under the less severe heat conditions. Instead a product which was stabilised by LMw pectin was included in this test since previous studies (US6890578 and US2006/0210668) have shown good results using a low Mw pectin upon sterilisation treatment of dairy protein-containing acidic drinks. However, also the LMw pectin stabilised products did not show acceptable stability results.

The most promising stability results were obtained for the SSPS and the HM8140 pectin stabilised products. These stabilisers were therefore used for tests on a larger, pilot plant scale (200 kg batches) to verify whether up scaling would give the same results.

### Experiment 2

The pilot plant scale products were prepared as follows.

Polysaccharides mixtures containing either SSPS or HM8140 pectin were prepared by the addition of 2.2136 kg of polysaccharide dried mixed with 6.6406 kg of maltodextrin. This was added to 76.1458 kg of cold water under high shear mixing and left for about 15 minutes for the polysaccharides to hydrate.

Separately a soy protein slurry was prepared by the addition of 20.9150 kg of WBP to 214.0850 kg of hot water under mixing. The slurry was left to hydrate for about 15 minutes.

The polysaccharide mixture was added to the soy protein-containing slurry after the soy protein-containing slurry had cooled down to about 20 °C. The resulting slurry was homogenised at 150 to 180 bar.

The rest of the ingredients were added directly to this slurry without making a pre-slurry. 2 kg of maltodextrin, 13 kg of sugar, 0.055 kg of a mix of calcium chloride, vitamin and mineral mix, flavour and juice and finally 0.3054 kg of citric acid. Water was added during mixing to achieve a final protein concentration of 0.6wt%. The pH of the resulting product was verified and adjusted to pH 4.0 if needed. All end products had a pH of 4.0.

The samples were heat treated at
a) 112 °C for 17 seconds
b) 125 °C for 17 seconds
and subsequently homogenised (at about 180 bar) and filled hot (> 90 °C) in plastic bottles. The amount of product in the bottles was 300 ml. The samples were stored under ambient conditions

The results showed immediate separation in the products stabilised by the HM8140 pectin, whereas the products stabilised by SSPS showed good stability over 20 weeks of storage under ambient conditions and a low particle size (taken on two days old samples) for both treatments. The results can be found in table 4.

**Table 4. Particle size (measured after 2 days) and sedimentation after 20 week of storage under ambient conditions for the pilot plant scale produced products treated at two different heat conditions.**

| Stabiliser | Heat treatment (°C) | D_{3.2} (micron) | D_{4.3} (micron) | Sedimentation (mm) |
|---|---|---|---|---|
| SSPS | 112 | 0.2 | 0.4 | 2 |
| SSPS | 125 | 0.2 | 0.4 | 2 |
| HM8140 | 112 | 13 | 16 | 30 |
| HM8140 | 125 | 13 | 16 | 30 |

### Experiment 3

A further test was conducted with beverages prepared on pilot plant scale. This time the final pH of the beverages was adjusted to 3.8. The amount of HM8140 pectin in the HM8140 stabilised end product was increased by 1.5 times. The amount of SSPS in the SSPS stabilised end product remained at the same level as was used in the previous pilot plant scale tests. In the following comparison the end products stabilised by HM8140 thus contain 1.5 times more stabiliser than the end products stabilised by SSPS.

The SSPS stabilised product of pH 3.8 and the product of pH 3.8 stabilised with an increased amount of HM8140 were heat treated at 96 °C for 5 seconds, homogenised at about 180 bar and filled hot at a temperature of between 93 and 95 °C. The products were stored under ambient conditions.

In addition to this, a product having a pH of 4.0 also stabilised with an increased amount of HM8140 was heat treated at 112 °C for 17 seconds, homogenised at about 180 bar and also filled hot at a temperature of between 93 and 95 °C. These products were also stored under ambient conditions.

Table 5 shows the levels of sedimentation after 20 weeks of storage under ambient Conditions for the SSPS stabilised product of pH 3.8, the product of pH 3.8 stabilised with an increased amount of HM8140 and the product having a pH of 4.0 also stabilised with an increased amount of HM8140. The particle size in the products was measured after two days of storage.

**Table 5. Particle size (measured after 2 days) and sedimentation after 20 week of storage under ambient conditions for the pilot plant scale produced products.**

| Stabiliser | pH | Heat treatment (°C) | D_{3.2} (micron) | D_{4.3} (micron) | Sedimentation (mm) |
|---|---|---|---|---|---|
| SSPS | 3.8 | 96 | 0.2 | 1.7 | 2 |
| HM8140 * 1.5 | 3.8 | 96 | 0.3 | 10 | 5 |
| HM8140 * 1.5 | 4.0 | 112 | 0.3 | 6 | 5 |

As can be seen from the results shown in table 5, increasing the HM8140 pectin concentration 1.5 times gave more stable end products than the same products stabilised with the lower amounts of HM8140 pectin. However, the levels of sedimentation and the particle size of the end product stabilised by SSPS is favourable compared to those of the end products stabilised by HM8140 pectin at a level that is 1.5 times higher than the level of SSPS in the SSPS stabilised product.

Based on the results of all the above described experiments it can be concluded that SSPS is the stabiliser best suited to stabilise a soy protein-containing acidic beverage that has to be sterilised at high temperatures.

## Claims

1. Process for the preparation of a soy protein-containing acidic beverage comprising the steps of:
• providing an aqueous composition having a pH of between 3.0 and 5.5, comprising a whole soy bean source in such an amount that the total protein content in the composition is from 0.2 to 5 wt%, and at least 0.1 wt% of water soluble soybean polysaccharide as a stabiliser, wherein the soy protein has a degree of solubility at a pH of 4.5 of less than 40 wt%, and wherein the weight ratio of the soy protein to water soluble soybean polysaccharide is between 7:1 and 1:2; which soluble soybean polysaccharide can be added as such and/or liberated from the whole soybean source by partly hydrolysing the soy cell wall material, and
• heating the aqueous composition to a temperature of more than 100 °C for at least 4 seconds.

2. Process according to claim 1, wherein the heating step comprises sterilising the aqueous composition.

3. Process according to claim 1 or 2, wherein the aqueous composition is heated to a temperature of more than 110 °C, preferably more than 120 °C.

4. Process according to any of the preceding claims, wherein the aqueous composition is kept at the heating temperature for at least 10 seconds, preferably at least 15 seconds.

5. Process according to any of the preceding claims, wherein the beverage and/or the aqueous composition has a pH of between 3.8 and 4.7.

6. Process according to any of the preceding claims, wherein the weight ratio of the soy protein to water soluble soybean polysaccharide is between 6:1 and 1:1, preferably between 5:1 and 2:1.

7. Process according to any of the preceding claims, wherein the water soluble soybean polysaccharide comprises a galacturonic acid content of less than 40 mol%, preferably less than 30 mol%, more preferably less than 25 mol% and a neutral sugar (side chains) content of more than 40 mol%, preferably more than 50 mol%, more preferably more than 60 mol%.

8. Process according to any of the preceding claims, wherein the heating step is followed by a packaging step.

9. Process according to claim 8, wherein during the packaging step the temperature of the aqueous composition is at least 85 °C when entering the package.

10. Process according to any of the preceding claims, wherein the aqueous composition comprises between 60 and 99 wt%, preferably between 80 and 98 wt% of water

11. A heat preserved soy protein-containing acidic beverage having a pH of between 3.0 and 5.5, comprising a whole soy bean source in such an amount that the total protein content in the composition is from 0.2 to 5 wt%, and at least 0.1 wt% of water soluble soybean polysaccharide as a stabiliser, wherein the soy protein has a degree of solubility at a pH of 4.5 of less than 40 wt%, said soluble soybean polysaccharide added as such and/or as part of whole soybean source from which it is liberated, and wherein the weight ratio of the soy protein to water soluble soybean polysaccharide is between 7:1 and 1:2

12. Beverage according to claim 11, wherein the heat preserved soy protein-containing acidic beverage is sterilised.

13. Beverage according to claim 11 or 12, wherein the beverage has a pH of between 3.8 and 4.7.

14. Beverage according to one of claims 11 to 13, wherein the weight ratio of the soy protein to water soluble soybean polysaccharide is between 6:1 and 1:1, preferably between 5:1 and 2:1.

15. Beverage according to any one of claims 11 to 14, wherein the water soluble soybean polysaccharide comprises a galacturonic acid content of less than 40 mol%, preferably less than 30 mol%, more preferably less than 25 mol% and a neutral sugar (side chains) content of more than 40 mol%, preferably more than 50 mol%, more preferably more than 60 mol%.

## Patentansprüche

1. Verfahren zum Herstellen eines Sojaprotein enthaltenden, sauren Getränks, das die folgenden Schritte aufweist:
• Bereitstellen einer wässrigen Zusammensetzung mit einem pH-Wert von 3,0 bis 5,5, die eine Vollsojabohnenquelle in einer solchen Menge, dass der gesamte Proteingehalt in der Zusammensetzung 0,2 bis 5 Gew.-% beträgt, und mindestens 0,1 Gew.-% eines wasserlöslichen Soja-Polysaccharids als einen Stabilisator aufweist, wobei das Sojaprotein einen Löslichkeitsgrad bei pH = 4,5 von weniger als 40 Gew.-% aufweist und wobei das Gewichtsverhältnis zwischen dem Sojaprotein und dem wasserlöslichen Soja-Polysaccharid 7:1 bis 1:2 beträgt, wobei das wasserlösliche Soja-Polysaccharid als solches zugesetzt werden kann und/oder durch teilweise Hydrolyse des Zellwandmaterials des Sojas aus der Vollsojabohnenquelle freigesetzt werden kann, und
• Erwärmen der wässrigen Zusammensetzung für mindestens 4 Sekunden auf eine Temperatur von mehr als 100 °C.

2. Verfahren nach Anspruch 1,
wobei der Schritt des Erwärmens das Sterilisieren der wässrigen Zusammensetzung aufweist.

3. Verfahren nach Anspruch 1 oder 2,
wobei die wässrige Zusammensetzung auf eine Temperatur von mehr als 110 °C, vorzugsweise mehr als 120 °C erwärmt wird.

4. Verfahren nach einem der vorstehenden Ansprüche,
wobei die wässrige Zusammensetzung für mindestens 10 Sekunden, vorzugsweise mindestens 15 Sekunden bei der Erwärmungstemperatur gehalten wird.

5. Verfahren nach einem der vorstehenden Ansprüche,
wobei das Getränk und/oder die wässrige Zusammensetzung einen pH-Wert von 3,8 bis 4,7 aufweist.

6. Verfahren nach einem der vorstehenden Ansprüche,
wobei das Gewichtsverhältnis zwischen dem Sojaprotein und dem wasserlöslichen Soja-Polysaccharid 6:1 bis 1:1, vorzugsweise 5:1 bis 2:1 beträgt.

7. Verfahren nach einem der vorstehenden Ansprüche,
wobei das wasserlösliche Soja-Polysaccharid einen Galacturonsäuregehalt von weniger als 40 Mol-%, vorzugsweise weniger als 30 Mol-%, stärker bevorzugt weniger als 25 Mol-% und einen Gehalt an neutralem Zucker (Seitenketten) von mehr als 40 Mol-%, vorzugsweise mehr als 50 Mol-%, stärker bevorzugt mehr als 60 Mol-% aufweist.

8. Verfahren nach einem der vorstehenden Ansprüche,
wobei dem Schritt des Erwärmens ein Schritt des Verpackens folgt.

9. Verfahren nach Anspruch 8,
wobei während des Schritts des Verpackens die Temperatur der wässrigen Zusammensetzung mindestens 85 °C beträgt, wenn sie in die Verpackung gelangt.

10. Verfahren nach einem der vorstehenden Ansprüche,
wobei die wässrige Zusammensetzung 60 bis 99 Gew.-%, vorzugsweise 80 bis 98 Gew.-% Wasser aufweist.

11. Heiß konserviertes, Sojaprotein enthaltendes, saures Getränk mit einem pH-Wert von 3,0 bis 5,5, das eine Vollsojabohnenquelle in einer solchen Menge, dass der gesamte Proteingehalt in der Zusammensetzung 0,2 bis 5 Gew.-% beträgt, und mindestens 0,1 Gew.-% wasserlösliches Soja-Polysaccharid als einen Stabilisator aufweist, wobei das Sojaprotein einen Löslichkeitsgrad bei pH = 4,5 von weniger als 40 Gew.-% aufweist, wobei das wasserlösliche Soja-Polysaccharid als solches und/oder als Teil der Vollsojabohnenquelle, aus der es freigesetzt wird, zugesetzt wurde und wobei das Gewichtsverhältnis zwischen dem Sojaprotein und dem wasserlöslichen Soja-Polysaccharid 7:1 bis 1:2 beträgt.

12. Getränk nach Anspruch 11,
wobei das heiß konservierte, Sojaprotein enthaltende, saure Getränk sterilisiert ist.

13. Getränk nach Anspruch 11 oder 12,
wobei das Getränk einen pH-Wert von 3,8 bis 4,7 aufweist.

14. Getränk nach einem der Ansprüche 11 bis 13,
wobei das Gewichtsverhältnis zwischen dem Sojaprotein und dem wasserlöslichen Soja-Polysaccharid 6:1 bis 1:1, vorzugsweise 5:1 bis 2:1 beträgt.

15. Getränk nach einem der Ansprüche 11 bis 14,
wobei das wasserlösliche Soja-Polysaccharid einen Galacturonsäuregehalt von weniger als 40 Mol-%, vorzugsweise weniger als 30 Mol-%, stärker bevorzugt weniger als 25 Mol-% und einen Gehalt an neutralem Zucker (Seitenketten) von mehr als 40 Mol-%, vorzugsweise mehr als 50 Mol-%, stärker bevorzugt mehr als 60 Mol-% aufweist.

## Revendications

1. Procédé de préparation d'une boisson acide contenant des protéines de soja, comprenant les étapes suivantes :
• l'obtention d'une composition aqueuse ayant un pH situé entre 3,0 et 5,5, comprenant une source de graines de soja entières en une quantité telle que la teneur totale en protéines dans la composition est de 0,2 % à 5 % en poids, et au moins 0,1 % en poids d'un polysaccharide de soja hydrosoluble en tant qu'agent de stabilisation, dans lequel les protéines de soja présentent un degré de solubilité à un pH de 4,5 inférieur à 40 % en poids, et dans lequel le rapport pondéral entre les protéines de soja et le polysaccharide de soja hydrosoluble est situé entre 7:1 et 1:2 ; ledit polysaccharide de soja soluble pouvant être ajouté en tant que tel et/ou libéré de la source de graines de soja entières par l'hydrolyse partielle de la matière de paroi cellulaire de soja, et
• le chauffage de la composition aqueuse à une température supérieure à 100 °C pendant au moins 4 secondes.

2. Procédé selon la revendication 1, dans lequel l'étape de chauffage comprend la stérilisation de la composition aqueuse.

3. Procédé selon la revendication 1 ou 2, dans lequel la composition aqueuse est chauffée à température supérieure à 110 °C, de préférence supérieure à 120 °C.

4. Procédé selon l'une quelconque des revendications précédentes, dans lequel la composition aqueuse est maintenue à la température de chauffage pendant au moins 10 secondes, de préférence pendant au moins 15 secondes.

5. Procédé selon l'une quelconque des revendications précédentes, dans lequel la boisson et/ou la composition aqueuse possède un pH situé entre 3,8 et 4,7.

6. Procédé selon l'une quelconque des revendications précédentes, dans lequel le rapport pondéral entre les protéines de soja et le polysaccharide de soja hydrosoluble est situé entre 6:1 et 1:1, de préférence entre 5:1 et 2:1.

7. Procédé selon l'une quelconque des revendications précédentes, dans lequel le polysaccharide de soja hydrosoluble comprend une teneur en acide galacturonique inférieure à 40 % en mole, de préférence inférieure à 30 % en mole et de manière davantage préférée inférieure à 25 % en mole, et une teneur en sucre neutre (chaînes latérales) supérieure à 40 % en mole, de préférence supérieure à 50 % en mole et de manière davantage préférée supérieure à 60 % en mole.

8. Procédé selon l'une quelconque des revendications précédentes, dans lequel l'étape de chauffage est suivie d'une étape de conditionnement.

9. Procédé selon la revendication 8, dans lequel, pendant l'étape de conditionnement, la température de la composition aqueuse est au moins de 85 °C lors de son entrée dans l'emballage.

10. Procédé selon l'une quelconque des revendications précédentes, dans lequel la composition aqueuse comprend entre 60 % et 99 % en poids, de préférence entre 80 % et 98 % en poids d'eau.

11. Boisson acide contenant des protéines de soja thermiquement traitées ayant un pH situé entre 3,0 et 5,5, comprenant une source de graines de soja entières en une quantité telle que la teneur totale en protéines dans la composition est de 0,2 % à 5 % en poids, et au moins 0,1 % en poids d'un polysaccharide de soja hydrosoluble en tant qu'agent de stabilisation, dans laquelle les protéines de soja présentent un degré de solubilité à un pH de 4,5 inférieur à 40 % en poids, ledit polysaccharide de soja soluble étant ajouté en tant que tel et/ou fait partie de la source de graines de soja entières desquelles il est libéré, et dans laquelle le rapport pondéral entre les protéines de soja et le polysaccharide de soja hydrosoluble est situé entre 7:1 et 1:2.

12. Boisson selon la revendication 11, dans laquelle la boisson acide contenant des protéines de soja thermiquement traitées est stérilisée.

13. Boisson selon la revendication 11 ou 12, dans laquelle la boisson possède un pH situé entre 3,8 et 4,7.

14. Boisson selon l'une quelconque des revendications 11 à 13, dans laquelle le rapport pondéral entre les protéines de soja et le polysaccharide de soja hydrosoluble est situé entre 6:1 et 1:1, de préférence entre 5:1 et 2:1.

15. Boisson selon l'une quelconque des revendications 11 à 14, dans laquelle le polysaccharide de soja hydrosoluble comprend une teneur en acide galacturonique inférieure à 40 % en mole, de préférence inférieure à 30 % en mole et de manière davantage préférée inférieure à 25 % en mole, et une teneur en sucre neutre (chaînes latérales) supérieure à 40 % en mole, de préférence supérieure à 50 % en mole et de manière davantage préférée supérieure à 60 % en mole.
